# EUROPÄISCHE PATENTANMELDUNG

(11) **EP 2 088 658 A2**
(43) Veröffentlichungstag der Anmeldung: **12.08.2009**
(21) Anmeldenummer: 09001240.2
(22) Anmeldetag: 29.01.2009
(51) Int. Cl.: H02G 15/18

(54) **Wärmeschrumpfbare Kabelmuffe zum Schutz mindestens einer Verbindungsstelle zwischen Kabeln**

(30) Priorität: 07.02.2008 DE 202008001748 U
(71) Anmelder: CCS Technology, Inc., Wilmington, DE 19803 (US)
(72) Erfinder: Thibault, Simon, 58099 Hagen (DE); Kupczyk, Andreas, 58099 Hagen (DE)
(74) Vertreter: Sturm, Christoph

(57) **Zusammenfassung**

Die Erfindung betrifft eine wärmeschrumpfbare Kabelmuffe, zum Schutz mindestens einer Verbindungsstelle zwischen Kabeln, mit einer wärmeschrumpfbaren Umhüllung, die zumindest eine wärmeaktivierte Flächenschicht (25) aufweist. Erfindungsgemäß weist die wärmeschrumpfbare Umhüllung (24) zusätzlich zu der wärmeaktivierten Flächenschicht (25) eine auf der Innenseite der Flächenschicht positionierte, hinsichtlich ihres Aggregatzustands stabile Dichtschicht (26) auf, sodass die Dichtschicht beim Schrumpfen der Umhüllung ihren Aggregatzustand beibehält, wobei die Flächenschicht (25) die Dichtschicht (26) beim Schrumpfen verformt und nach dem Schrumpfen in einem verformten Zustand hält. (Fig. 10)

## Beschreibung

Die Erfindung betrifft eine wärmeschrumpfbare Kabelmuffe zum Schutz mindestens einer Verbindungsstelle zwischen Kabeln nach dem Oberbegriff des Anspruchs 1 bzw. 9.

Wärmeschrumpfbare Kabelmuffen verfügen über eine wärmeschrumpfbare Umhüllung, wobei solche wärmeschrumpfbaren Umhüllungen z. B. aus dem Stand der Technik gemäß EP 0 776 753 B1 sowie EP 0 443 696 B2 bekannt sind. Die aus dem Stand der Technik bekannten, wärmeschrumpfbaren Umhüllungen verfügen über eine wärmeaktivierte, schrumpfbare Flächenschicht, die auch als Manschette bezeichnet wird, sowie über eine auf der Innenseite der Flächenschicht positionierte, ebenfalls wärmeaktivierte Kleberschicht. Zum Aufbringen einer solchen wärmeschrumpfbaren Umhüllung auf eine Verbindungsstelle zwischen Kabeln wird die wärmeschrumpfbare Umhüllung mit Hilfe eines Gasbrenners erhitzt, wobei in Folge der Wärmeeinwirkung des Gasbrenners die wärmeaktivierte Flächenschicht schrumpft und sich um die Verbindungsstelle zwischen den Kabeln schmiegt. Die wärmeaktivierte Kleberschicht auf der Innenseite der Flächenschicht wird in Folge der Wärmeeinwirkung ausgehend von einem festen Aggregatzustand verflüssigt und geht anschleißend nach Ausbleiben der Wärmeeinwirkung wieder in den festen Aggregatzustand über, um so die Abdichtung zwischen den Kabeln untereinander und der geschrumpften Flächenschicht zu gewährleisten. Die Kleberschicht der wärmeschrumpfbaren Umhüllung wirkt demnach als Dichtschicht, die hinsichtlich ihres Aggregatzustands instabil ist.

Insbesondere dann, wenn mit einer wärmeschrumpfbaren Kabelmuffe mehrere Verbindungsstellen zwischen jeweils zwei Kabeln geschützt werden sollen, wenn also zu beiden Seiten bzw. Enden der Kabelmuffe jeweils mehrere Kabel in dieselbe eingeführt bzw. aus derselben ausgeführt werden sollen, kommt im Bereich jedes Endes bzw. jeder Seite der wärmeschrumpfbaren Kabelmuffe jeweils mindestens ein Dichtelement zum Einsatz, um die Kabel gegeneinander und gegenüber der wärmeschrumpfbaren Umhüllung abzudichten. Nach dem Stand der Technik besteht ein solches Dichtelement aus einem metallischen Grundkörper, der mit einem wärmeaktivierten Kleber, einem sogenannten Heißschmelzkleber, beschichtet ist. In Folge der Wärmeeinwirkung wird bei einer solchen Kabelmuffe demnach einerseits die wärmeaktivierte Flächenschicht der wärmeschrumpfbaren Umhüllung und andererseits der wärmeaktivierte Kleber des oder jedes Dichtelements in einen flüssigen Aggregatzustand überführt, wobei nach dem Ausbleiben der Wärmeeinwirkung dieselben wieder in einen festen Aggregatzustand übergehen. Nach dem Stand der Technik sind demnach sowohl die wärmeaktivierte Kleberschicht der wärmeschrumpfbare Umhüllung als auch der Kleber des oder jedes Dichtelements hinsichtlich ihres Aggregatzustands instabil.

Hiervon ausgehend liegt der vorliegenden Erfindung das Problem zu Grunde, eine neuartige wärmeschrumpfbare Kabelmuffe zum Schutz einer Verbindungsstelle zwischen Kabeln zu schaffen. Dieses Problem wird nach einem ersten Aspekt der Erfindung dadurch gelöst, dass die eingangs genannte wärmeschrumpfbare Kabelmuffe durch die Merkmale des kennzeichnenden Teils des Anspruchs 1 weitergebildet ist. Hiernach ist das oder jedes Dichtelement als ein hinsichtlich seines Aggregatzustands stabiles Dichtelement ausgeführt, sodass das oder jedes Dichtelement beim Schrumpfen der Umhüllung seinen Aggregatzustand beibehält, wobei die wärmeschrumpfbare Umhüllung zur Bereitstellung der Abdichtung des oder jedes Kabels das oder jedes Dichtelement beim Schrumpfen verformt und nach dem Schrumpfen in einem verformten Zustand hält.

Nach dem ersten Aspekt der hier vorliegenden Erfindung ist das oder jedes Dichtelement hinsichtlich seines Aggregatzustands stabil ausgeführt, wobei die wärmeschrumpfbare Umhüllung beim Schrumpfen das oder jedes Dichtelement verformt und nach dem Schrumpfen im verformten Zustand hält. Das oder jedes Dichtelement wird demnach durch das Freisetzen von Schrumpfkräften beim Schrumpfen der Umhüllung komprimiert und verformt, um so die Abdichtung des Kabels gegenüber der wärmeschrumpfbaren Umhüllung bereitzustellen. Hierzu muss auf das oder jedes Dichtelement keine Wärme einwirken, ausschließlich die wärmeschrumpfbare Umhüllung muss einer Wärmeeinwirkung ausgesetzt werden. Insgesamt benötigt die wärmeschrumpfbare Kabelmuffe demnach ein deutlich geringere Wärmemenge als aus dem Stand der Technik bekannte Kabelmuffen, weshalb sowohl die Montage als auch die Demontage der erfindungsgemäßen Kabelmuffe schonender für die Kabel sowie gegebenenfalls in der Kabelmuffe abgelegte Spleißkomponenten erfolgen kann.

Nach einem zweiten Aspekt der Erfindung wird das Problem durch eine wärmeschrumpfbare Kabelmuffe gemäß Anspruch 9 gelöst. Hiernach weist die wärmeschrumpfbare Umhüllung zusätzlich zu der wärmeaktivierten Flächenschicht eine auf der Innenseite der Flächenschicht positionierte, hinsichtlich ihres Aggregatzustands stabile Dichtschicht auf, sodass die Dichtschicht beim Schrumpfen der Umhüllung ihren Aggregatzustand beibehält, wobei die Flächenschicht die Dichtschicht beim Schrumpfen verformt und nach dem Schrumpfen in einem verformten Zustand hält.

Nach dem zweiten Aspekt der hier vorliegenden Erfindung ist auf die Innenseite der Flächenschicht eine hinsichtlich ihres Aggregatzustands stabile Dichtschicht aufgebracht, die beim Schrumpfen der Umhüllung ihren Aggregatzustand beibehält, wobei die Flächenschicht der wärmeschrumpfbaren Umhüllung die Dichtschicht beim Schrumpfen der wärmeaktivierten Flächenschicht verformt und nach dem Schrumpfen in einem verformten Zustand hält.

In diesem Fall kann auf eine wärmeaktivierte Kleberschicht auf der Innenseite der Flächenschicht unter Umständen vollständig verzichtet werden. Auch die Kabelmuffe nach dem zweiten Aspekt der hier vorliegenden Erfindung benötigt eine deutlich geringere Wärmemenge beim Schrumpfen und damit bei der Bereitstellung der Dichtfunktion zum Schutz der oder jeder Verbindungsstelle zwischen Kabeln. Die Montage und Demontage der Kabelmuffe kann demnach für die Kabel und die in der Kabelmuffe zu schützenden Spleißkomponenten wiederum schonender erfolgen.

Die beiden erfindungsgemäßen Aspekte können alleine oder in Verbindung miteinander zum Einsatz kommen.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, anhand der Zeichnung näher erläutert. In der Zeichnung zeigt:
- Fig. 1:: eine stark schematisierte, perspektivische Darstellung einer erfin- dungsgemäßen, wärmeschrumpfbaren Kabelmuffe, die eine wär- meschrumpfbaren Umhüllung und mindestens ein Dichtelement um- fasst ;
- Fig. 2:: ein Detail des Dichtelements der erfindungsgemäßen Kabelmuffe;
- Fig. 3:: ein zu Fig. 2 alternatives Dichtelement;
- Fig. 4:: ein weiteres zu Fig. 2 alternatives Dichtelement;
- Fig. 5:: ein weiteres zu Fig. 2 alternatives Dichtelement;
- Fig. 6:: ein weiteres zu Fig. 2 alternatives Dichtelement;
- Fig. 7:: ein weiteres zu Fig. 2 alternatives Dichtelement;
- Fig. 8:: ein Detail der wärmeschrumpfbaren Umhüllung der erfindungsgemä- ßen Kabelmuffe;
- Fig. 9:: eine zu Fig. 8 alternative, wärmeschrumpfbare Umhüllung; und
- Fig. 10:: eine weitere zu Fig. 8 alternative, wärmeschrumpfbare Umhüllung.

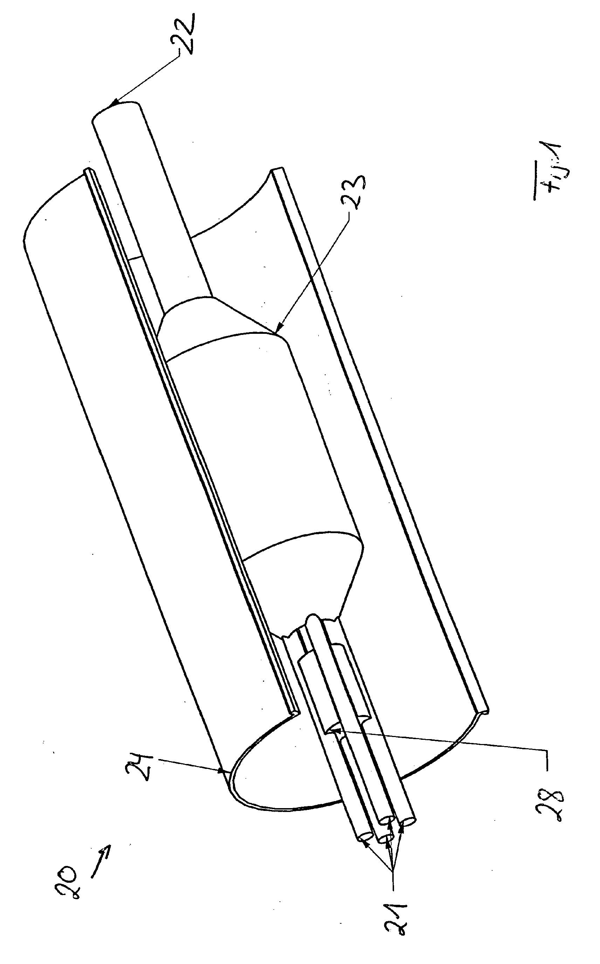

Fig. 1 zeigt eine schematisierte Darstellung einer erfindungsgemäßen, wärmeschrumpfbaren Kabelmuffe 20, die im gezeigten Ausführungsbeispiel der Abdichtung von vier Verbindungsstellen zwischen jeweils zwei Kabeln dient. In Fig. 1 sind die vier einlaufenden Kabel mit der Bezugsziffer 21 und die vier auslaufenden Kabel mit der Bezugsziffer 22 gekennzeichnet, wobei die Verbindungsstellen zwischen den Kabeln 21, 22 im Bereich 23 ausgebildet sind, der Spleißkomponenten umfasst.

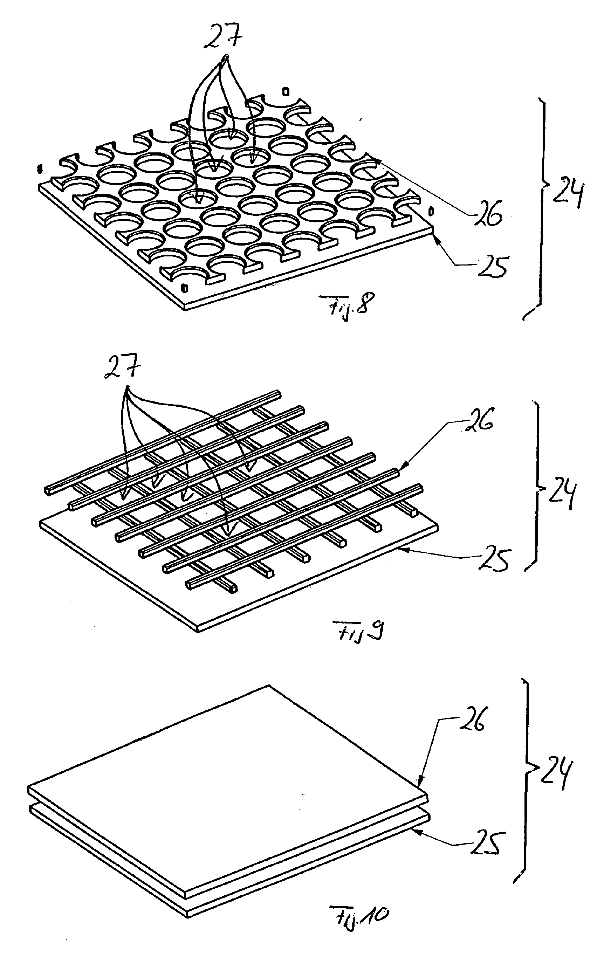

Die Kabelmuffe 20 umfasst eine wärmeschrumpfbare Umhüllung 24. Nach einem Aspekt der hier vorliegenden Erfindung ist die wärmeschrumpfbare Umhüllung 24 im Sinne der Fig. 8 bis 10 aufgebaut, wobei dann die wärmeschrumpfbare Umhüllung 24 eine wärmeaktivierte Flächenschicht 25 umfasst, die auch als Manschette bzw. Schrumpfmanschette bezeichnet wird.

Gemäß Fig. 8 bis 10 ist einer Innenseite der wärmeaktivierten Flächenschicht 25 eine hinsichtlich ihres Aggregatzustands stabile Dichtschicht 26 zugeordnet. Gemäß Fig. 8, 9 ist die hinsichtlich ihres Aggregatzustands stabile Dichtschicht 26 partiell bzw. teilflächig auf die Innenseite der wärmeaktivierten Flächenschicht 25 aufgebracht. In Fig. 10 ist hingegen die hinsichtlich ihres Aggregatzustands stabile Dichtschicht 26 vollflächig auf die Innenseite der wärmeaktivierten Flächenschicht 25 aufgebracht.

Beim Schrumpfen der wärmeaktivierten Flächenschicht 25 in Folge einer Wärmeeinwirkung behält die Dichtschicht 26 ihren Aggregatzustand bei, die Dichtschicht 25 geht demnach nicht in einen flüssigen Zustand über. Vielmehr verformt die Flächenschicht 25 der Umhüllung 24 die Dichtschicht 26 beim Schrumpfen und hält dieselbe nach dem Schrumpfen und nach dem Ausbleiben der Wärmeeinwirkung in dem verformten Zustand. Zur Bereitstellung der Dichtfunktion über die Dichtschicht 26 ist demnach keine Wärmeeinwirkung für die Dichtschicht 26 sondern ausschließlich für die wärmeaktivierte, wärmeschrumpfbare Flächenschicht 25 erforderlich.

Vorzugsweise ist die hinsichtlich ihres Aggregatzustands stabile Dichtschicht aus einem elastisch verformbaren Werkstoff, insbesondere aus einem Elastomer, hergestellt. Bei dem Werkstoff der Dichtschicht 26 kann es sich um ein Polyurethangel oder um ein Silikongel handeln. Im Unterschied hierzu ist es auch möglich, dass die Dichtschicht 26 aus einem plastisch-elastisch verformbaren Werkstoff oder einem plastisch verformbaren Werkstoff hergestellt ist.

Im Ausführungsbeispiel der Fig. 8 und 9, in welchem die Dichtschicht 26 nur partiell und demnach teilflächig auf die Innenseite der Flächenschicht 25 aufgebracht ist, weist die Dichtschicht 26 Ausnehmungen 27 auf. Diese Ausnehmungen 27 können mit einem wärmeaktivierten Kleber, der hinsichtlich seines Aggregatzustands beim Schrumpfen instabil ist, ausgefüllt sein, um so die Dichtfunktion, die von der hinsichtlich ihres Aggregatzustands beim Schrumpfen stabilen Dichtschicht 26 bereitgestellt wird, zu unterstützen.

Bei den wärmeschrumpfbaren Umhüllungen 24 der Fig. 8 bis 9 können die auf der Innenseite der Flächenschichten 25 positionierten Dichtschichten 26 mit den Flächenschichten 25 verbunden sein. Es ist auch möglich, dass die Flächenschichten 25 und Dichtschichten 26 der wärmeschrumpfbaren Umhüllungen 24 der Fig. 8 bis 10 nicht miteinander verbunden sondern als separate Komponenten ausgeführt sind.

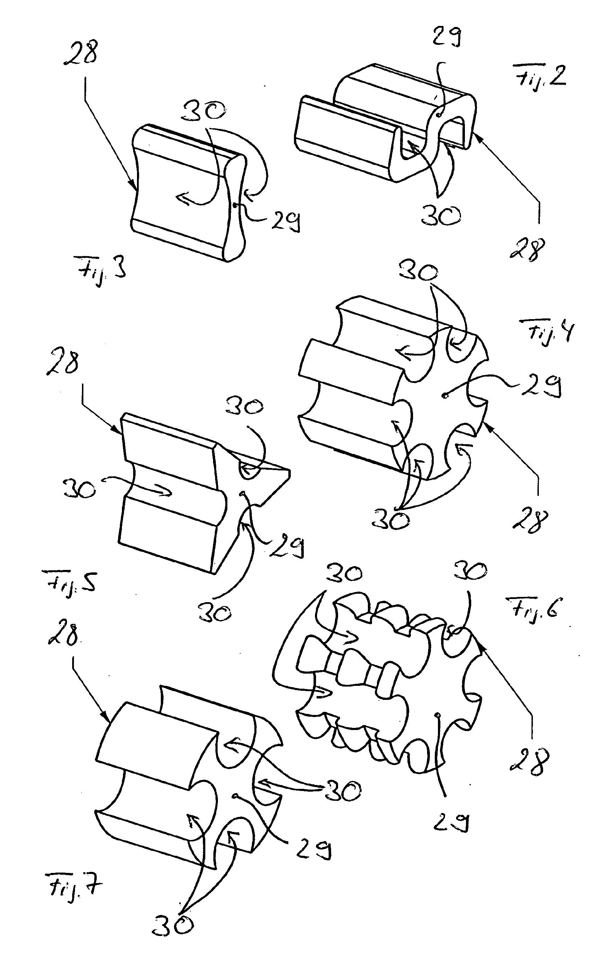

Wie bereits im Zusammenhang mit Fig. 1 ausgeführt, dient im gezeigten Ausführungsbeispiel die Kabelmuffe 20 dem Schutz von vier Verbindungsstellen zwischen jeweils zwei miteinander zu verbindendenden Kabeln 21, 22, wobei die Dichtfunktion zwischen den Kabeln 21 und 22 und der Umhüllung 24 über mindestens ein Dichtelement 28 unterstützt wird, welches die Kabel 21 bzw. 22 gegenüber der schrumpfbaren Umhüllung 24 sowie gegeneinander abdichtet. Fig. 2 bis 7 zeigen unterschiedliche Ausführungsvarianten für solche Dichtelemente 28, die sich hinsichtlich ihrer äußeren Formgebung und der Anzahl der abzudichtenden Kabel unterscheiden.

Nach einem anderen Aspekt der hier vorliegenden Erfindung ist das oder jedes Dichtelement 28 hinsichtlich seines Aggregatzustands stabil ausgeführt, sodass dasselbe beim Schrumpfen der wärmeschrumpfbaren Umhüllung 24 seinen Aggregatzustand beibehält. Die wärmeschrumpfbare Umhüllung 24 verformt beim Schrumpfen das oder jedes Dichtelement 28 unter Beibehaltung des Aggregatzustands desselben und hält dasselbe nach dem Schrumpfen in dem verformten Zustand.

Die Bereitstellung der Dichtfunktion des oder jedes Dichtelements 28 erfolgt demnach über beim Schrumpfen der wärmerückstellbaren Umhüllung 24 bereitgestellte Schrumpfkräfte, eine Wärmeeinwirkung ist demnach nur zum Schrumpfen der Umhüllung 24 erforderlich.

Das oder jedes Dichtelement 28 der erfindungsgemäßen Kabelmuffe 20 ist vorzugsweise aus einem elastisch verformbaren Werkstoff, insbesondere aus einem Elastomer, hergestellt. So kann das oder jedes Dichtelement 28 aus einem Polyurethangel oder einem Silikongel hergestellt sein. Im Unterschied hierzu ist es auch möglich, dass das oder jedes Dichtelement 28 aus einem plastisch-elastisch verformbaren Werkstoff oder einem plastisch verformbaren Werkstoff hergestellt ist.

Die Dichtelemente 28 der Fig. 2 bis 7 verfügen allesamt über einen Grundkörper 29, der an seiner Mantelfläche und/oder in einem zentralen Abschnitt mindestens eine Ausnehmung 30 zur Aufnahme, Führung und Abdichtung jeweils eines Kabels aufweist. In den Ausführungsbeispielen der Fig. 4, 6 und 7 ist dabei der Grundkörper 29 zylindrisch konturiert und verfügt an seiner Mantelfläche mehrere Ausnehmungen 30 zur Aufnahme, Führung und Abdichtung jeweils eines Kabels, wobei in den Ausführungsbeispielen der Fig. 4 und 6 der Grundkörper 29 entlang seiner Mantelfläche sechs Ausnehmungen 30 und im Ausführungsbeispiel der Fig. 7 vier Ausnehmungen 30 aufweist.

In den Ausführungsbeispielen der Fig. 2 und 3 verfügt der Grundkörper 29 der Dichtelemente 30 über jeweils zwei Ausnehmungen 30 und im Ausführungsbeispiel der Fig. 5 über drei Ausnehmungen 30 zur Aufnahme, Führung und Abdichtung jeweils eines Kabels.

Die Konturierung des Grundkörpers 29 des Dichtelements 28 gemäß Fig. 6 erlaubt eine erleichterte Aufnahme und Abdichtung von Kabeln mit unterschiedlichen Durchmessern in den Ausnehmungen 30 des Dichtelements 28.

Dann, wenn in die Dichtelemente 28 der Fig. 2 bis 7 abzudichtende Kabel eingeführt sind, kann um die Einheit aus Dichtelement 28 und abzudichtenden Kabeln zusätzlich ein hinsichtlich seines Aggregatzustands beim Schrumpfen stabiles Band aus z. B. einem gelartigen Werkstoff gewickelt werden, um die Abdichtfunktion zu verbessern.

Es kann auch auf die Dichtelemente 28 verzichtet und um mehrere abzudichtende Kabel ein hinsichtlich seines Aggregatzustands beim Schrumpfen stabiles Band aus z. B. einem gelartigen Werkstoff gewickelt werden.

Die Wärmeeinwirkung beim Schrumpfen der wärmeschrumpfbaren Umhüllung 24 kann insbesondere über einen Gasbrenner oder über einen Heißluftfön bereitgestellt werden.

### Bezugszeichenliste

- 20: Kabelmuffe
- 21: Kabel
- 22: Kabel
- 23: Bereich
- 24: Umhüllung
- 25: Flächenschicht
- 26: Dichtschicht
- 27: Ausnehmung
- 28: Dichtelement
- 29: Grundkörper
- 30: Ausnehmung

## Patentansprüche

1. Wärmeschrumpfbare Kabelmuffe, zum Schutz mindestens einer Verbindungsstelle zwischen Kabeln, mit einer wärmeschrumpfbaren Umhüllung, die zumindest eine wärmeaktivierte Flächenschicht aufweist, und mit mindestens einem Dichtelement zur Abdichtung jeweils mindestens eines Kabels gegenüber der wärmeschrumpfbaren Umhüllung und/oder gegenüber mindestens einem anderen Kabel, **dadurch gekennzeichnet, dass** das oder jedes Dichtelement (28) als ein hinsichtlich seines Aggregatzustands stabiles Dichtelement (28) ausgeführt ist, sodass das oder jedes Dichtelement (28) beim Schrumpfen der Umhüllung (24) seinen Aggregatzustand beibehält, wobei die wärmeschrumpfbare Umhüllung (24) zur Bereitstellung der Abdichtung des oder jedes Kabels das oder jedes Dichtelement (28) beim Schrumpfen verformt und nach dem Schrumpfen in einem verformten Zustand hält.

2. Kabelmuffe nach Anspruch 1, **dadurch gekennzeichnet, dass** das oder jedes Dichtelement (28) aus einem elastisch verformbaren Werkstoff oder einem plastisch-elastisch verformbaren Werkstoff oder einem plastisch verformbaren Werkstoff hergestellt ist.

3. Kabelmuffe nach Anspruch 1 oder 2, **dadurch gekennzeichnet, dass** das oder jedes Dichtelement (28) aus einem Elastomer hergestellt ist.

4. Kabelmuffe nach einem der Ansprüche 1 bis 3, **dadurch gekennzeichnet, dass** das oder jedes Dichtelement (28) aus einem Polyurethangel oder aus einem Silikongel hergestellt ist.

5. Kabelmuffe nach einem der Ansprüche 1 bis 4, **dadurch gekennzeichnet, dass** das oder jedes Dichtelement (28) einen Grundkörper (29) aufweist, der an seiner Mantelfläche und/oder in einem zentralen Abschnitt mindestens eine Ausnehmung (30) zur Aufnahme eines Kabels aufweist.

6. Kabelmuffe nach Anspruch 5, **dadurch gekennzeichnet, dass** der Grundkörper (29) zylindrisch konturiert ist.

7. Kabelmuffe nach einem der Ansprüche 1 bis 6, **dadurch gekennzeichnet, dass** die wärmeschrumpfbaren Umhüllung zusätzlich zu der wärmeaktivierten Flächenschicht eine auf der Innenseite der Flächenschicht positionierte, ebenfalls wärmeaktivierte Kleberschicht aufweist.

8. Kabelmuffe nach einem der Ansprüche 1 bis 7, **gekennzeichnet durch** Merkmale nach einem oder mehreren der Ansprüche 9 bis 15.

9. Wärmeschrumpfbare Kabelmuffe, zum Schutz mindestens einer Verbindungsstelle zwischen Kabeln, mit einer wärmeschrumpfbaren Umhüllung, die zumindest eine wärmeaktivierte Flächenschicht aufweist, **dadurch gekennzeichnet, dass** die wärmeschrumpfbare Umhüllung (24) zusätzlich zu der wärmeaktivierten Flächenschicht (25) eine auf der Innenseite der Flächenschicht positionierte, hinsichtlich ihres Aggregatzustands stabile Dichtschicht (26) aufweist, sodass die Dichtschicht beim Schrumpfen der Umhüllung ihren Aggregatzustand beibehält, wobei die Flächenschicht (25) die Dichtschicht (26) beim Schrumpfen verformt und nach dem Schrumpfen in einem verformten Zustand hält.

10. Kabelmuffe nach Anspruch 9, **dadurch gekennzeichnet, dass** die Dichtschicht (26) aus einem elastisch verformbaren Werkstoff oder einem plastisch-elastisch verformbaren Werkstoff oder einem plastisch verformbaren Werkstoff hergestellt ist.

11. Kabelmuffe nach Anspruch 9 oder 10, **dadurch gekennzeichnet, dass** die Dichtschicht (26) aus einem Elastomer hergestellt ist.

12. Kabelmuffe nach einem der Ansprüche 9 bis 11, **dadurch gekennzeichnet, dass** die Dichtschicht (26) aus einem Polyurethangel oder aus einem Silikongel hergestellt ist.

13. Kabelmuffe nach einem der Ansprüche 9 bis 12, **dadurch gekennzeichnet, dass** die Dichtschicht (26) vollflächig ausgebildet ist.

14. Kabelmuffe nach einem der Ansprüche 9 bis 12, **dadurch gekennzeichnet, dass** die Dichtschicht (26) Ausnehmungen (27) aufweist.

15. Kabelmuffe nach Anspruch 14 **dadurch gekennzeichnet, dass** die Ausnehmungen (27) mit einem wärmeaktivierten Kleber ausgefüllt sind.

16. Kabelmuffe nach einem der Ansprüche 9 bis 15, **gekennzeichnet durch** Merkmale nach einem oder mehreren der Ansprüche 1 bis 7.
